# EUROPÄISCHE PATENTANMELDUNG

(11) **EP 1 564 431 A1**
(43) Veröffentlichungstag der Anmeldung: **17.08.2005**
(21) Anmeldenummer: 05003233.3
(22) Anmeldetag: 16.02.2005
(51) Int. Cl.: F16D 66/02, F16D 66/00

(54) **Vorrichtung zur Temperaturmessung von sich drehenden Fahrzeugkomponenten**

(30) Priorität: 16.02.2004 DE 102004007380
(71) Anmelder: KNORR-BREMSE SYSTEME FÜR NUTZFAHRZEUGE GMBH, 80809 München (DE)
(72) Erfinder: Csak, Bence, 1124 Budapest (HU)
(74) Vertreter: Schönmann, Kurt, Dr.

(57) **Zusammenfassung**

Die Erfindung betrifft eine Vorrichtung zur Temperaturmessung von sich drehenden Fahrzeugkomponenten (1), welche mit nicht drehenden Fahrzeugkomponenten (8) in Reibkontakt bringbar sind, insbesondere zur Temperaturmessung von Bremsscheiben (1) in Scheibenbremsen (2).

Die Erfindung sieht vor, dass die nicht drehende Fahrzeugkomponente (8) einen Wärmeleitkörper (10) aus einem Material mit einer demgegenüber höheren Wärmeleitfähigkeit trägt, welcher mit seinem einem Ende mit der drehenden Fahrzeugkomponente (1) in Reibkontakt bringbar ist und mit seinem von der drehenden Fahrzeugkomponente (1) weg weisenden Ende mit einem Temperatursensor (12) in wärmeleitendem Kontakt steht.

## Beschreibung

### Stand der Technik

Die Erfindung geht aus von einer Vorrichtung zur Temperaturmessung von sich drehenden Fahrzeugkomponenten, welche mit nicht drehenden Fahrzeugkomponenten in Reibkontakt bringbar sind, insbesondere zur Temperaturmessung von Bremsscheiben in Scheibenbremsanlagen, nach der Gattung des Patentanspruchs 1.

Als Maß für den Verschleiß und die Wirksamkeit von Fahrzeugbremseinrichtungen, insbesondere von Schiebenbremseinrichtungen wird häufig die Temperatur der Reibpartner bzw. der Bremsscheibe herangezogen. Eine zu hohe Temperatur der Bremsscheibe deutet auf einen starken Bremsenverschleiß bzw. auf eine reduzierte Wirksamkeit der Bremse hin.

Beim Stand der Technik wird die Temperatur der Bremsscheibe entweder direkt oder indirekt gemessen. Bei den indirekten Meßmethoden wird die Bremsscheibentemperatur abhängig von der Bremskraftverlauf über der Zeit auf Erfahrungswerten basierend geschätzt. Direkte Meßmethoden beinhalten beispielsweise die Messung der von der erhitzten Bremsscheibe ausgehenden Wärmestrahlung. Die beschriebenen Methoden sind jedoch entweder relativ ungenau oder aufwändig und teuer.

Der Erfindung liegt demgegenüber die Aufgabe zugrunde, eine Vorrichtung der eingangs erwähnten Art derart weiter zu bilden, dass die Temperatur der sich drehenden Fahrzeugkomponente mit möglichst einfachen Mitteln möglichst genau erfasst werden kann.

Erfindungsgemäß wird diese Aufgabe durch die Merkmale des Patentanspruchs 1 gelöst.

### Vorteile der Erfindung

Indem gemäß der Erfindung die nicht drehende Fahrzeugkomponente einen Wärmeleitkörper aus einem Material mit einer demgegenüber höheren Wärmeleitfähigkeit trägt, welcher mit seinem einem Ende mit der drehenden Fahrzeugkomponente in Reibkontakt bringbar ist und mit seinem von der drehenden Fahrzeugkomponente weg weisenden Ende mit einem Temperatursensor in wärmeleitendem Kontakt steht, findet während eines Bremsvorgangs ein bevorzugter Wärmetransport von der sich drehenden Fahrzeugkomponente entlang des Wärmeleitkörpers zum Temperatursensor statt. Wegen seiner vergleichsweise hohen Wärmeleitfähigkeit nimmt der Wärmeleitkörper die Temperatur der sich drehenden Fahrzeugkomponente sehr schnell an und weist in Wärmeleitrichtung gesehen einen geringen Temperaturgradienten auf. Aus den genannten Gründen kommt die Temperatur des von der drehenden Fahrzeugkomponente abgewandten Endes des Wärmeleitkörpers der Temperatur der sich drehenden Fahrzeugkomponente sehr nahe und kann durch den in direktem Wärmeleitkontakt stehenden Temperatursenor gemessen werden. Da an diesen keine höheren Anforderungen gestellt werden, können einfache und billige Sensoren verwendet werden. Die Messgenauigkeit ist dabei genauso hoch bzw. höher als bei aufwändigeren Meßmethoden. Auch entfällt eine separate Wartung des Wärmeleitkörpers, da er zusammen mit der zugeordneten nicht drehenden Fahrzeugkomponente verschleißt und eine entsprechende Lebensdauer aufweist.

Durch die in den Unteransprüchen aufgeführten Maßnahmen sind vorteilhafte Weiterbildungen und Verbesserungen der im Patentanspruch 1 angegebenen Erfindung möglich.

Gemäß einer bevorzugten Ausführungsform der Erfindung besteht die sich nicht drehende Fahrzeugkomponente in einem der Bremsscheibe zugeordneten Bremsbelag. Der Wärmeleitkörper kann aus Kupfer oder aus einer Kupferlegierung bestehen und somit eine wesentlich höhere Wärmeleitfähigkeit aufweisen als der ihn tragende Bremsbelag, welcher meist aus einem organischen Material besteht.

Zugunsten einer einfachen Wartung bzw. eines einfachen Austausches sollte der Wärmeleitkörper und der Temperatursensor mit dem Bremsbelag zu einer Baueinheit verbaut sein und insbesondere der Wärmeleitkörper in den Bremsbelag eingebettet oder integriert sein.

Gemäß einer Weiterbildung kann der Wärmeleitkörper stabförmig ausgebildet sein und sich von der der Bremsscheibe zugewandten, als Reibfläche wirkenden Oberfläche bis zu der von der Bremsscheibe abgewandten Oberfläche des Bremsbelags erstrecken. Der mit dem Wärmeleitkörper in Kontakt stehende Temperatursensor wird vorzugsweise durch ein bekanntes Thermoelement gebildet, weil ein solches relativ kostengünstig bei hoher Messgenauigkeit und auch resistent gegenüber den bei Scheibenbremsen hohen Temperaturen ist.

### Zeichnungen

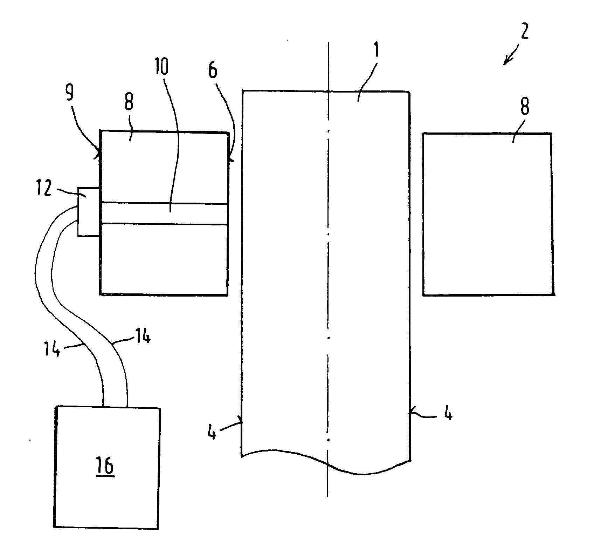

Ein Ausführungsbeispiel der Erfindung ist in der Zeichnung dargestellt und in der nachfolgenden Beschreibung näher erläutert. In der Zeichnung zeigt die einzige Figur eine Querschnittsdarstellung einer Vorrichtung zur Temperaturmessung einer Bremsscheibe einer Scheibenbremse eines Fahrzeugs gemäß einer bevorzugten Ausführungsform der Erfindung.

### Beschreibung des Ausführungsbeispiels

In der Figur ist eine Vorrichtung zur Temperaturmessung einer Bremsscheibe 1 einer Scheibenbremse 2 eines Fahrzeugs, insbesondere eines Nutzfahrzeugs gemäß einer bevorzugten Ausführungsform der Erfindung gezeigt. Mit Stimflächen 4 der Bremsscheibe 1 sind in bekannter Weise während eines Bremsvorgangs Bremsbeläge 8 in Reibkontakt bringbar, welche ansonsten um das Belagspiel von dieser beabstandet sind.

Die Bremsbeläge 8 bestehen aus einem vorzugsweise organischen Material mit einer geringeren Wärmeleitfähigkeit als ein Wärmeleitkörper 10, der in den einen Bremsbelag 8 eingebettet mit seinem einem Ende mit der drehenden Bremsscheibe 1 in Reibkontakt bringbar ist und mit seinem von der Bremsscheibe 1 weg weisenden Ende mit einem Temperatursensor 12 in wärmeleitendem Kontakt steht. Als Temperatursensor wird vorzugsweise ein an sich bekanntes Thermoelement verwendet, beispielsweise ein NiCr-Ni-Thermopaar. Anstatt in nur einen können auch in beide Bremsbeläge 8 je ein Wärmeleitkörper 10 mit zugeordnetem Temperatursensor 12 integriert sein. Im Hinblick auf eine möglichst hohe Wärmeleitfähigkeit besteht der Wärmeleitkörper 10 vorzugsweise aus Kupfer oder aus einer Kupferlegierung. Es kann aber auch jegliches andere Material mit hoher Wärmeleitfähigkeit verwendet werden.

Besonders bevorzugt ist der Wärmeleitkörper 10 stabförmig ausgebildet und erstreckt sich von der der Bremsscheibe 1 zugewandten, als Reibfläche wirkenden Oberfläche 6 bis zu der von der Bremsscheibe 1 abgewandten Oberfläche 9 des Bremsbelags 8. Vom Temperatursensor 12 ausgehende Signalleitungen 14 stehen mit einer elektronischen Temperaturauswerteeinheit 16 in Verbindung.

Vor diesem Hintergrund ist die Funktionsweise der erfindungsgemäßen Vorrichtung wie folgt : Weil die Wärmeleitfähigkeit des Materials des Wärmeleitkörpers 10 höher ist als diejenige des Materials des Bremsbelags 8 findet während eines Bremsvorgangs ein bevorzugter Wärmetransport von der Bremsscheibe 1 entlang des Wärmeleitkörpers 10 zum Temperatursensor 12 statt.

Wegen seiner vergleichsweise hohen Wärmeleitfähigkeit nimmt der Wärmeleitkörper 10 die Temperatur der Bremsscheibe 1 sehr schnell an und weist in Wärmeleitrichtung gesehen einen geringen Temperaturgradienten auf. Aus den genannten Gründen kommt die Temperatur des von der Bremsscheibe 1 abgewandten Endes des Wärmeleitkörpers 10 der Temperatur der Bremsscheibe 1 sehr nahe und kann durch den in direktem Wärmeleitkontakt stehenden Temperatursenor 12 gemessen werden. Ein der gemessenen Temperatur entsprechendes Temperatursignal wird dann an die Temperaturauswerteeinheit 16 ausgesteuert und dort weiterverarbeitet, beispielsweise zu einer Information über den Verschleißzustand der Scheibenbremse 2.

### Bezugszahlenliste

- 1: Bremsscheibe
- 2: Scheibenbremse
- 4: Stirnfläche
- 6: Oberfläche
- 8: Bremsbeläge
- 9: Oberfläche
- 10: Wärmeleitkörper
- 12: Temperatursensor
- 14: Signalleitungen
- 16: Temperaturauswerteeinheit

## Patentansprüche

1. Vorrichtung zur Temperaturmessung von sich drehenden Fahrzeugkomponenten (1), welche mit nicht drehenden Fahrzeugkomponenten (8) in Reibkontakt bringbar sind, insbesondere zur Temperaturmessung von Bremsscheiben (1) in Scheibenbremsen (2), **dadurch gekennzeichnet, dass** die nicht drehende Fahrzeugkomponente (8) einen Wärmeleitkörper (10) aus einem Material mit einer demgegenüber höheren Wärmeleitfähigkeit trägt, welcher mit seinem einem Ende mit der drehenden Fahrzeugkomponente (1) in Reibkontakt bringbar ist und mit seinem von der drehenden Fahrzeugkomponente (1) weg weisenden Ende mit einem Temperatursensor (12) in wärmeleitendem Kontakt steht.

2. Vorrichtung nach Anspruch 1, **dadurch gekennzeichnet, dass** die sich nicht drehende Fahrzeugkomponente ein der Bremsscheibe (1) zugeordneter Bremsbelag (8) ist.

3. Vorrichtung nach Anspruch 1 oder 2, **dadurch gekennzeichnet, dass** der Wärmeleitkörper (10) und der Temperatursensor (12) mit dem Bremsbelag (8) zu einer Baueinheit verbaut sind.

4. Vorrichtung nach Anspruch 3, **dadurch gekennzeichnet, dass** der Wärmeleitkörper (10) in den Bremsbelag (8) eingebettet oder integriert ist.

5. Vorrichtung nach Anspruch 4, **dadurch gekennzeichnet, dass** der Wärmeleitkörper (10) stabförmig ausgebildet ist und sich von der der Bremsscheibe (1) zugewandten, als Reibfläche wirkenden Oberfläche (6) bis zu der von der Bremsscheibe (1) abgewandten Oberfläche (9) des Bremsbelags (8) erstreckt.

6. Vorrichtung nach wenigstens einem der vorhergehenden Ansprüche, **dadurch gekennzeichnet, dass** der Wärmeleitkörper (10) aus Kupfer oder aus einer Kupferlegierung besteht.

7. Vorrichtung nach wenigstens einem der vorhergehenden Ansprüche, **dadurch gekennzeichnet, dass** der Temperatursensor (12) durch ein Thermoelement gebildet wird.
